# EUROPEAN PATENT APPLICATION

(11) **EP 2 601 824 A1**
(43) Date of publication of application: **12.06.2013**
(21) Application number: 12196173.4
(22) Date of filing: 07.12.2012
(51) Int. Cl.: A01B 1/22, B25G 1/04

(54) **Apparatus for gardening**

(30) Priority: 09.12.2011 GB 201121276
(71) Applicant: Sanders, John Anthony, Stoke-on-Trent Staffordshire ST4 3LJ (GB)
(72) Inventor: Sanders, John Anthony, Stoke-on-Trent Staffordshire ST4 3LJ (GB)
(74) Representative: Swindell & Pearson Limited

(57) **Abstract**

Apparatus (10) for gardening having an elongate handle (12) and a tool head (18) located at one end of the handle (12) to extend at least in part at an angle to the lengthwise axis of the handle (12). The elongate handle (12) is arranged to enable selective movement of the elongate handle (12) from an extended condition to a contracted condition.

## Description

### Apparatus for Gardening

Embodiments of the present invention relate to apparatus for gardening.

Garden tools, such as rakes, hoes, forks and spades are commonly stored in garden sheds or other garden buildings or storage areas and have the disadvantage of being elongate and generally difficult to store. In addition rakes, hoes and similar such tools can cause a health and safety hazard due to the traditional configuration of the rake head and handle being such that a traditional rake presents the possibility of a person accidentally stepping on the head of a rake located on the ground causing the rake handle to lever up and strike the person, potentially causing harm to that person.

According to various, but not necessarily all, embodiments of the invention there is provided apparatus for gardening comprising,
an elongate handle,
a tool head located at one end of the handle to extend at least in part at an angle to the lengthwise axis of the handle,
the elongate handle being arranged to enable selective movement thereof from an extended condition to a contracted condition.

The handle may comprise a plurality of sections arranged to be selectively movable relative to each other. At least some of the sections may be relatively movable generally along the lengthwise axis of the handle.

At least some of the sections may be telescopically arranged to enable selective telescopic movement therebetween.

Alternatively or in addition at least some of the sections may be mutually detachable to enable the handle to be at least partly selectively broken down into sections.

Alternatively or in addition at least some of the sections may be pivotally interconnected to enable selectively pivotal movement therebetween.

Securing means may be provided to secure some or all of the sections in relative position, particularly when arranged so that the elongate handle is in the extended condition and may be also when the handle is in the contracted condition.

The securing means may comprise retaining means to releasably retain some or all of the sections in relative fixed location when the handle is in at least one of the extended or contracted conditions.

The securing means may comprise locking means to releasably lock some or all of the sections in relative fixed location when the handle is in at least one of the extended or contracted conditions.

At least one section may be retained or locked, particularly against longitudinal movement, relative to at least one other section using the securing means.

The securing means may comprise a compression fitting configured to releasably clamp one section to an adjacent section.

The securing means may be removably or permanently fixed to at least one section.

The securing means may comprise a detent arrangement comprising a projection arranged on one section and a means for retaining the projection of the detent arrangement on another section.

The projection of the detent arrangement may comprise a ball or pin, projecting from the side, generally at one end, of the one section.

The projection may be resiliently biased to project from the side of the one section, such as by way of spring arrangement, to be movable into the side to enable location of said another section over the one section for the projection to resiliently engage with the means for retaining.

The means for retaining the projection of the detent arrangement may comprise a concavity or aperture in the side of the said another section.

The tool head may comprise a rake head having a plurality of tines, one or more of which extends, at least in part, at an angle to the lengthwise axis of the handle.

The tool head may comprise a hoe or other tool head that extends, at least in part, at an angle to the lengthwise axis of the handle.

The angle may be between 45 degrees and 135 degrees to the lengthwise axis of the handle. The angle may be between 60 degrees and 120 degrees to the lengthwise axis of the handle. The angle may be between 75 and 105 degrees to the lengthwise axis of the handle. The angle may be substantially 90 degrees to the lengthwise axis of the handle.

The handle when in the contracted condition may be no longer than 1 metre. The handle in the contracted condition may be no longer than 0.8 metre. The handle in the contracted condition may be no longer than 0.5 metre.

According to a further embodiment of the invention there is provided an elongate handle for connection to a tool head,
the elongate handle being arranged to enable selective movement thereof from an extended condition to a contracted condition.

The handle may be as described in any of the preceding paragraphs.
Fig. 1 is a diagrammatic view of a rake in an extended condition according to the present invention;
Fig. 2 is a diagrammatic view of a rake in a contracted condition according to the present invention;
Fig. 3 is a cross sectional view of a securing means according to the present invention.
Fig. 4 is a diagrammatic view of a traditional rake as typically stored.
Fig. 5 is a diagrammatic view of an alternative rake in a contracted condition according to the present invention;
Fig. 6 is a diagrammatic view of a further alternative rake in a contracted condition according to the present invention; and

The present invention provides apparatus 10 for gardening comprising, an elongate handle 12, a tool head 18 located at one end of the handle 12 to extend at least in part at an angle to the lengthwise axis of the handle 12, the elongate handle 12 being arranged to enable selective movement thereof from an extended condition to a contracted condition.

The present invention further provides an elongate handle 12 for connection to a tool head 18, the elongate handle 12 being arranged to enable selective movement thereof from an extended condition to a contracted condition.

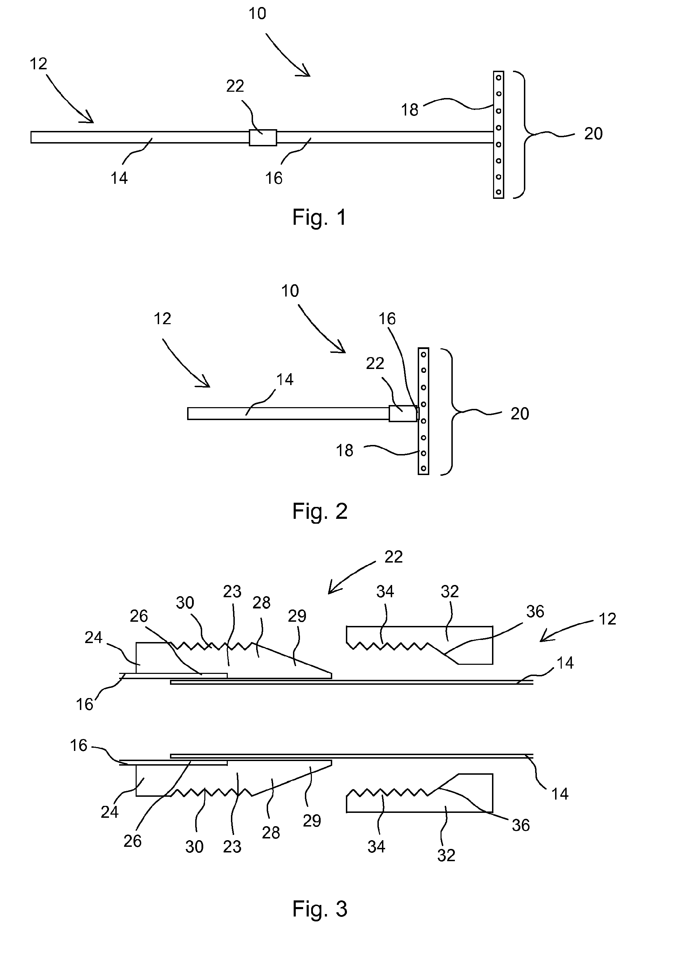

In an example of the invention, shown in Figs. 1 and 2, the apparatus 10 is in the form of a telescopic rake. The rake 10 comprises a first section 14 and a tubular second section 16. In an alternative arrangement the handle 12 may comprise three or more sections, one or more of which may be tubular. The tool head 18 comprises a portion which extends, at least in part, at an angle to the lengthwise axis of the handle 12, that is the axis disposed along the longitudinal axis of the handle 12. In the specific case of a rake 10, the tool head 18 comprises a plurality of tines 20 extending, at least in part, at an angle to the lengthwise axis of the handle 12. Such angles may be around 90 degrees to facilitate operation of the tool head 18 as depicted in the drawings, although tool heads 18 comprising a plurality of tines 20 extending, at least in part, at angles other than 90 degrees, such as angles between 45 degrees and 135 degrees from the lengthwise axis of the handle 12, fall within the scope of the present invention.

The outer diameter of the first section 14 is smaller than the inner diameter of the tubular second section 16 such that the first section 14 may be selectively, slidingly moved in both inward and outward directions within the tubular second section 16 in a telescopic manner. Such movement enables the first section 14 to be selectively inserted and retracted from the second section 16 between a fully contracted condition, as shown in Fig. 2, and a fully extended condition, as shown in Fig. 1.

In an alternative telescopic arrangement the outer diameter of a tubular first section 14 may be larger than the inner diameter of a second section 16 such that the second section 16 may be inserted into the tubular first section 14 to provide a contracted condition for the rake 10, or extended therefrom to provide an extended condition for the rake 10.

A releasable securing means 22 comprises locking means such as a clamp means to secure the first section 14 in a position relative to the second section 16.

Fig. 3 shows one form of securing means 22, in the form of a compression clamp means. A first end 24 of a first component 23 of the compression clamp means 22 is fixed to an end 26 of the second section 16. Such fixing may be effected by using glue, screws, threaded means, compression fittings or other fixing devices to secure the first end 24 of the first component 23 of the compression clamp means 22 to the end 26 of the second section 16. The first component 23 further comprises an outer threaded tubular section 30 suitable for receiving a threaded annular member 32.

A second end 28 of the first component 23 of the compression clamp means 22 is arranged to project beyond the end 26 of the second section 16. The second end 28 of the first component 23 comprises resilient tabs or prongs 29 formed by the second end 28 having slots along its length in a direction parallel to the lengthwise axis of the handle 12, those slots being disposed at spaced intervals around the circumference of the second end 28. The outer diameter of the second end 28 of the first component 23 may taper, arranged to increase in diameter towards the first end 24 of the first component 23 to form a generally frustoconical an array of spaced resilient tabs or prongs 29. The array of spaced resilient tabs or prongs 29 forming at least part of the second end 28 of the first component 23 is arranged to receive a threaded annular member 32, comprising an inner threaded portion 34, suitable for connection to the outer threaded tubular section 30 of the first component 23.

The threaded annular member 32 further comprises a deflection surface 36. The threaded tubular member 32 and the first component 23 are secured by tightening of the inner threaded portion 34 of the threaded annular member 32 onto the outer threaded tubular section 30 of the first component 23. Continued tightening of the threaded annular member 32 onto the first component 23 causes the array of spaced resilient tabs or prongs 29 to be brought into contact with the deflection surface 36 causing force to be applied to the array of spaced resilient tabs or prongs 29, thereby causing the tabs or prongs 29 to be deflected into closer proximity such that the slots which are disposed around the circumference of the second end 28 are narrowed, effectively decreasing the circumference of the second end 28. The deflection of the tabs or prongs 29 causes at least some of the tabs or prongs 29 to contact the first section 14 of the handle 12.

The combination of the fixed first component 23 of the compression clamp means 22 and the threaded annular member 32 thereby provides a releasable securing means suitable for securing a first section 14 and a second section 16 of the handle 12 in position relative to each other.

In use the rake 10 may be in an initial extended condition, with the handle sections 14, 16 being secured in the extended condition by the operation of the compression clamp means 22. In this condition the handle 12 is generally of equivalent length to a traditional rake and as such the rake 10 can be used as a traditional rake, for instance by a person in a standing position wishing to operate the rake 10 close by or at some distance from themselves.

In order to facilitate ease of storage, provide safety benefits of a smaller rake, or for instance for use by a shorter person or one who requires use of the rake 10 in a sitting position, the rake 10 can be collapsed or contracted into a partially or fully contracted condition. In a contracted condition the storage of the rake 10 will be less burdensome, as the length of the handle 12 will be less than the length of the handle 12 when fully extended, thereby facilitating storage in smaller storage areas.

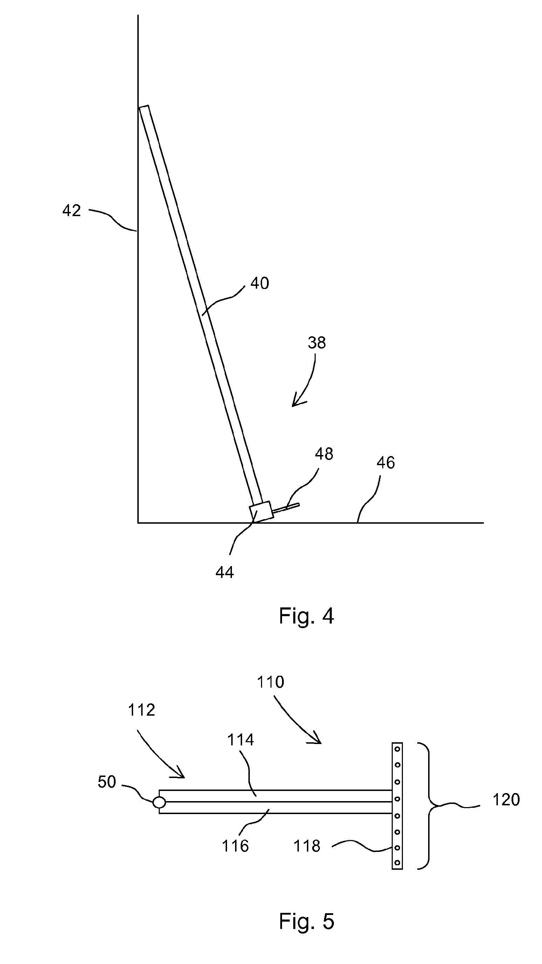

As previously noted a traditional rake presents the possibility of a person accidentally stepping on the head of the rake, when the rake head is located at or near ground level. Fig. 4 shows a traditional rake 38 in a position typically used for the storage of a rake 38, that is with the handle 40 at an acute angle to a vertical surface 42, such as a wall, and the rake head 44 resting on a horizontal surface 46, such as the ground. The projection of the tines 48 on the rake 38 presents a potential hazard. A person may step upon the rake head 44, or more specifically the tines 48 of the rake head 44, causing the rake handle 40 to lever up and strike the person, potentially causing harm to that person. Further a traditional rake 38, stored with the handle 40 of the rake 38 orientated with the handle 40 at an acute angle to a vertical surface 42, such as a wall, and the rake head 44 furthest from the horizontal surface 46, such as the ground, may pose a danger to the face, and in particular eyes of a person, particularly by the action of the tines 48 of the rake head 44. By contraction of the handle 12 of the rake 10 of the present invention, the problems of storage and safety are reduced. Further, the rake 10 can be used with the handle 12 extended or contracted to a chosen length to accommodate difference in the height of the user, or to accommodate use by disabled or otherwise impaired users who may need to use a rake 10 from a seating position. In particular the fully contracted length of the rake 10 may be 1 metre or less, thereby reducing the possibility of the handle 12 striking a person in the head or face, or the rake head 18 being at the level of a person's face when stored as noted above. In other arrangements the fully contracted length of the rake 10 may be 0.8 metres or less, preferably 0.5 metres or less, such that the possibility of damage to a person is significantly reduced. It will be readily appreciated by a person skilled in the art that when shorter sections are used to achieve shorter fully contracted lengths, more than the two sections illustrated in figures 1, 2, 5 and 6 will be required.

In order to facilitate the contraction of the rake 10 the threaded annular member 32 is rotated in a first rotation direction on the compression clamp means 22 such that it facilitates loosening of the tabs or prongs 29 from the first section 14 of the handle 12, thus allowing the first section 14 to be moved relative to the second section 16. Once the first section 14 has been moved to a partially contracted or fully contracted condition then the threaded annular member 32 can be rotated in the opposite direction to the first rotation direction to facilitate tightening of the tabs or prongs 29, via compression, onto the first section 14 to provide secure arrangement of the first section 14 and second section 16.

An alternative arrangement is shown in Fig. 5. Features of the apparatus that are the same or substantially the same as corresponding features in the apparatus that can be seen in Figs. 1 and 2, and described herein, are referenced by the same reference numerals, prefixed with the number '1'. In the alternative arrangement of Fig. 5 the sections 114, 116 of the elongate handle 112 of the rake 110 may be pivotally connected together such as by hinge means 50 to provide the capability of having an extended and a contracted condition. If more than two sections are used then the handle 112 may be partially contracted or partially extended and not necessarily folded to a fully contracted or fully extended condition.

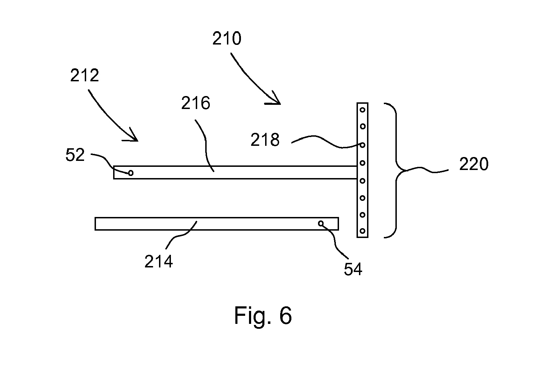

A further alternative arrangement is shown in Fig. 6. Features of the apparatus that are the same or substantially the same as corresponding features in the apparatus that can be seen in Figs. 1 and 2, and described herein, are referenced by the same reference numerals, prefixed with the number '2'. In the further alternative arrangement of Fig. 6 the sections 214, 216 of the elongate handle 212 of the rake 210 may be separate detachable multisections capable of being screwed, pinned, compressed or otherwise removably connected together to provide the capability of having an extended and a contracted condition. If three or more sections are used then the handle 212 may be partially contracted or partially extended and not necessarily separated to a fully contracted or fully extended condition. Fig. 6 shows securing means comprising a first connection member 52 for securing to a second connection member 54, each of these connection members being towards an end of each section 214, 216 to facilitate securing of the first section 214 to the second section 216 in an extended condition. Further, connection members may be disposed at other positions on the side of the sections 214, 216 to facilitate securing of the first section 214 to the second section 216 at other positions, which may include contracted positions.

Although embodiments of the present invention have been described in the preceding paragraphs with reference to various examples, it should be appreciated that modifications to the examples given can be made without departing from the scope of the invention as claimed.

In alternative arrangements comprising three or more handle sections, each of the sections may be connected using any of the aforementioned connection means. Within a handle 12, all sections may be connected and secured using the same means, or different means can be used for different sections. So as an example, in a handle comprising three sections, a first and second section may be connected and securable together as described in relation to the embodiment of Figs. 1, 2 and 3 and the second and a third section may be connected and securable together as described in relation to the embodiment of Fig. 5.

The present invention has been described such that by clamping the first section 14 and the second section 16 relative to each other, the arrangement of the first section 14 and the second section 16 may be secured in an extended or a contracted condition, however it will be apparent to the person skilled in the art that a contracted condition will encompass intermediate conditions between the fully extended and fully contracted conditions.

Although the compression clamp means 22 of the present invention has been described as being formed by the second end 28 of the first component 23 comprising resilient tabs or prongs 29 operable to be deflected upon application of a force to effectively clamp the first section 14 and the second section 16 of the handle 12 in secure arrangement, alternative clamp means can be envisaged. For example, in an alternative arrangement, the second end 28 of the first component 23 may comprise an outer threaded tapered arrangement, having slots along the length of the second end 28 in a direction parallel to the lengthwise axis of the handle 12 disposed at intervals around the circumference of the outer threaded tapered arrangement to form a generally frustoconical array of spaced threaded sections, for receiving an inner threaded tapered annular member, whereby tightening of the inner threaded tapered annular member onto the outer threaded tapered arrangement causes a force to be applied to the outer threaded tapered arrangement, causing the array of threaded sections thereof to be forced into closer proximity by the closure of the slots which are disposed around the circumference of the tapered threaded arrangement. The outer threaded tapered arrangement is therefore reduced in circumference, thereby facilitating the clamping of the sections 14, 16 of the handle 12.

Although the present invention has been described whereby the securing means is provided by a threaded compression clamp means 22, it will be appreciated that other securing means, suitable for releasably locking the plurality of sections together may be used. One alternative releasable locking arrangement provides detent means, such as sprung loaded pins or ball bearings which resiliently project from the side of one section to be located in corresponding apertures or concavities in the side of another section. When aligned, the location pin or ball bearing is accepted into or through an aperture or concavity in the other section, preventing extension or contraction of the sections relative to each other. Another alternative is for each section to have one or more apertures in the side allowing the insertion of a pin through the apertures of two sections arranged such that apertures in their sides are aligned to accept a pin therethrough, preventing extension or contraction of the sections relative to each other.

Although the present invention has been described whereby at least a first section 14 and a second section 16 are releasably locked in one of the extended or contracted conditions, it will be appreciated that other securing means may be used whereby the at least a first section 14 and a second section 16 are releasably retained in one of the extended or contracted conditions by retaining means. For example, retaining means may comprise a raised member on one section and a notch on an adjacent section, such that the raised member can be brought into coincidence with the notch such that the sections are retained together but not mechanically locked in position.

A further alternative securing means providing releasable retention of at least a first section 14 and a second section 16 requires sections comprising shaped internal and/or external surfaces, which are frictionally retained together when twisted together, preventing extension or contraction of the sections relative to each other. Alternatively the sections may be shaped to be frictionally retained together when contracted or extended to their fullest extents.

In alternative arrangements comprising three or more sections, each of the sections may be releasably secured using any of the aforementioned securing means, such that each section can be in a contracted, or an extended condition.

Although the present invention has been described in relation to a rake 10, the invention could be applied to other garden tools, such as hoes, that comprise a tool head 18 that extends, at least in part, at an angle to the lengthwise axis of the handle 12.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus for gardening comprising,
an elongate handle,
a tool head located at one end of the handle to extend at least in part at an angle to the lengthwise axis of the handle,
the elongate handle being arranged to enable selective movement thereof from an extended condition to a contracted condition.

2. Apparatus according to claim 1, wherein the handle comprises a plurality of sections arranged to be selectively movable relative to each other.

3. Apparatus according to claim 2, wherein at least some of the sections are relatively movable generally along the lengthwise axis of the handle.

4. Apparatus according to claim 2 or claim 3, wherein at least some of the sections are telescopically arranged to enable selective telescopic movement therebetween and/or wherein at least some of the sections are mutually detachable to enable the handle to be at least partly selectively broken down into sections and/or wherein at least some of the sections are pivotally interconnected to enable selectively pivotal movement therebetween.

5. Apparatus according to any of claims 2 to 4, wherein securing means is provided to secure some or all of the sections in relative position when arranged so that the elongate handle is in the extended condition and/or the contracted condition.

6. Apparatus according to claim 7, wherein the securing means comprises retaining means to releasably retain some or all of the sections in relative fixed location when the handle is in at least one of the extended or contracted conditions.

7. Apparatus according claim 5 or claim 6, wherein the securing means comprises locking means to releasably lock some or all of the sections in relative fixed location when the handle is in at least one of the extended or contracted conditions.

8. Apparatus according to claim 6 or claim 7, wherein at least one section is retained or locked, particularly against longitudinal movement, relative to at least one other section using the securing means.

9. Apparatus according to any of claims 5 to 8, wherein the securing means comprises a compression fitting configured to releasably clamp one section to an adjacent section.

10. Apparatus according to any of claims 5 to 8, wherein the securing means comprises a detent arrangement comprising a projection arranged on one section and a means for retaining the projection of the detent arrangement on another section.

11. Apparatus according to claim 10, wherein the projection of the detent arrangement comprises a ball or pin, projecting from the side, generally at one end, of the one section.

12. Apparatus according to claim 10 or claim 11, wherein the projection is resiliently biased to project from the side of the one section, such as by way of spring arrangement, to be movable into the side to enable location of said another section over the one section for the projection to resiliently engage with the means for retaining.

13. Apparatus according to any of claims 10 to 12, wherein the means for retaining the projection of the detent arrangement comprises a concavity or aperture in the side of the said another section.

14. An elongate handle for connection to a tool head, the elongate handle being arranged to enable selective movement thereof from an extended condition to a contracted condition.

15. An elongate handle according to claim 14, wherein the handle is as claimed in any of claims 2 to 13.
